# EUROPÄISCHE PATENTSCHRIFT

(11) **EP 0 447 643 B1**
(45) Veröffentlichungstag und Bekanntmachung des Hinweises auf die Patenterteilung: **19.01.1994**
(21) Anmeldenummer: 90124207.3
(22) Anmeldetag: 14.12.1990
(51) Int. Cl.: B60K 23/02, G01L 3/04

(54) **Steuerung für die Kupplung eines Getriebes in einem Kraftfahrzeug**
Control system for a clutch of a transmission in a motor vehicle
Commande de l'embrayage d'une transmission dans un véhicule motorisé

(30) Priorität: 09.02.1990 DE 4003866
(43) Veröffentlichungstag der Anmeldung: 25.09.1991
(73) Patentinhaber: MAN Nutzfahrzeuge Aktiengesellschaft, 80976 München (DE)
(72) Erfinder: Heuer, Fritz, Ing. grad., W-8067 Petershausen (DE)

(56) Entgegenhaltungen:
- EP-A- 0 241 215
- DE-A- 3 810 449
- DE-A- 3 831 449
- DE-U- 8 102 740
- FR-A- 2 559 106

## Beschreibung

Die Erfindung bezieht sich auf eine Steuerung für die Hauptkupplung eines Schaltgetriebes in einem Kraftfahrzeug, insbesondere Nutzfahrzeug, mit Rad-Drehzahlsensoren und mindestens einem weiteren Drehzahlsensor sowie den dazugehörigen Polrädern und einer Steuerelektronik, die auch mit bekannten ABS- und /oder ASR-Systemen zusammenwirken kann, wobei ein Torsionsmoment im Triebstrang zur Steuerung der Kupplung ermittelt und berücksichtigt wird.

Herkömmliche Systeme verwenden als Regelgröße die Motordrehzahl, Getriebe-ein- und -ausgangsdrehzahl, den Weg am Kupplungs-Ausrücksystem und den eingelegten Fahrgang. Weiter wird in die Elektronik die Hinterachsübersetzung und die Reifengröße einprogrammiert. Dies reicht in der Regel bei Personenkraftwagen mit geringen Gesamtgewichtsunterschieden für die Bestimmung der Schaltzeit aus.

Anders sieht dies bei Nutzfahrzeugen und Bussen mit großen Gewichtsunterschieden zwischen leerem und voll beladenem Fahrzeug aus. Weiterhin kann sich ein Nutzfahrzeug im Straßen- oder Geländeeinsatz befinden, woraus unterschiedliche Radstände samt Triebstranglängen, Achsübersetzungen und Reifengrößen resultieren. Bei großem Drehmomentenunterschied ist der Fahrer oft überfordert, die Fahrkupplung ruckfrei und doch mit einer kurzen Schlupfzeit zu steuern. Je kürzer die Schlupfzeiten, besonders am Berg, geregelt werden können, desto geringer ist die Zugkraftunterbrechnung und somit der Geschwindigkeitsverlust beim Schalten. Bei Leerfahrzeugen darf jedoch aus Komfortgründen die Einkuppelzeit in der Ebene nicht zu gering sein, da durch die geringere Fahrzeugmasse Schaltstöße unangenehm wirken.

Zur Lösung der anstehenden Probleme wäre es in einer ersten Überlegung denkbar, Lastsensoren an allen Achsen bzw. Rädern des Fahrzeuges anzubringen und die ermittelten Werte in Kombination mit den Werten eines Neigungsmessers auszuwerten. Dies wird jedoch bei näherer Betrachtung sehr aufwendig und damit kostspielig. Um den Belastungszustand des Gesamtzuges zu messen, müßte jede Achse sensoriert werden - auch die Anhänger- bzw. Aufliegerachsen. Damit wäre aber der Steuerelektronik immer noch nicht bekannt, ob das Fahrzeug beschleunigt oder verzögert wird oder nur rollen soll. Weiterhin ist so der Straßenzustand, ob glatt oder griffig, nicht meßbar.

Durch die DE 3404 156 A1 war bereits eine Steuerung für die Kupplung eines Getriebes in einem Kraftfahrzeug bekannt, bei der zur optimalen Steuerung der Kupplung, insbesondere zur Verhinderung von Triebstrangtorsionsschwankungen, das Triebstrangtorsionsmoment ermittelt und berücksichtigt wird. Bei diesem Stand der Technik wird das Triebstrangtorsionsmoment - zusätzlich zu einer Anzahl von Drehzahlsignalen - mit einem eigenen Sensor zwischen Kupplung und Schaltgetriebe (direkt) ermittelt und der Steuerelektronik zugeführt. Es wird also hier die Verwendung eines Drehmomentsensors zur Bestimmung des Drehmomentes im Antriebsstrang im Hinblick auf eine optimale Kupplungssteuerung gelehrt.

Sowohl aus der DE-OS 21 32 397, als auch aus der DE-OS 19 54 739 war es weiterhin bekannt, zur genauen Steuerung des Schaltdrucks und damit des Schaltrucks in einem automatischen Getriebe das Drehmoment im Antriebsstrang aus einer durch die Elastizität des Antriebsstranges bedingten Phasenverschiebung der Drehzahl an zwei voneinander beabstandeten Stellen des Antriebsstranges zu ermitteln. In der erstgenannten Entgegenhaltung geschieht dies durch die Ermittlung der Phasenverschiebung durch die Verdrehung der Kurbelwelle, in der zweitgenannten an einem speziell vorbereiteten Wellenstück der Getriebeausgangswelle. Einen Hinweis auf eine entsprechende Möglichkeit zur Drehmomentbestimmung zwischen Getriebeausgangswelle und Radantrieb - wie dies beim Anmeldegegenstand vorgesehen ist - enthalten beide Schriften nicht.

Der Erfindung liegt die Aufgabe zugrunde, ein einfaches System zur Erkennung der Straßenverhältnisse und Belastungszustände zu schaffen, um eine optimale Schaltzeit für die Kupplung zu ermitteln.

Dies wird erfindungsgemäß dadurch erreicht, daß der weitere Drehzahlsensor die Drehzahl am Getriebeausgang ermittelt, daß als Kenngröße zur Bestimmung der Einkuppelzeit der Hauptkupplung der Triebstrang-Torsionswinkel benutzt wird, der aus dem Vergleich der Signale des Getriebeausgangs-Drehzahlsensors und der Antriebsräder-Drehzahlsensoren ermittelt wird und daß die Einkuppelzeit durch Vergleich des Triebstrang-Torsionswinkels mit einem auf einem Einfahrrollenprüfstand ermittelten Eichwert bestimmt wird.

Solcherart wird neben dem durch den Fahrer ausgelösten Schaltbefehl mittels der Steuerelektronik eine optimale Schaltzeit in Abhängigkeit von Straßenneigung und Beladungszustand vorgegeben. Dies ist für den Fahrer, insbesondere im Zustand einer gewissen Ermüdung nach längerer Fahrt, eine bedeutende Erleichterung, indem er sein Augenmerk ganz dem Straßengeschehen widmen kann. So ist es besonders wichtig, bei voll genutzter Beladung oder auch am Berg die Kupplungszeit und damit die Schlupfzeit so gering wie möglich zu halten, um so die Zugkraftunterbrechung und den Geschwindigkeitsverlust zu minimieren. Dabei ist es für die Einkuppelzeit nicht wichtig zu differenzieren, ob beschleunigt wird, hohe Last anliegt oder Steigungen bewältigt werden müssen, denn die Einkuppelzeit muß in jedem Falle gleich und dem hohen anliegenden Drehmoment gemäß kurz sein (kleine Zugkraftunterbrechung). Dies trifft auch für die Verzögerung bzw. das Fahren im Gefälle zu.

Nach einem besonders wichtigen Merkmal der Erfindung ist die Kupplungszeit bei einem Torsionswinkel von 0 bis zu einem aus den Variabeln ermittelten Mindesttorsionswert durch einen in die Steuerung eingespeisten Konstantwert, der deutlich über dem Eichwert liegt, bestimmt. Liegt nur ein geringes bzw. kein Drehmoment, bzw. ein geringer oder kein Torsionswinkel am Antriebsstrang an, so erkennt die Kupplungselektronik, daß entweder das Fahrzeug gering ausgelastet ist oder in der Ebene rollt. In diesem Fall muß aus Komfortgründen die Einkuppelzeit verlängert werden, damit Schaltstöße minimiert werden.

Nach einem anderen Merkmal der Erfindung wird beim Anfahren von Randsteinen oder ähnlichem, angezeigt durch einen hohen Antriebsstrang-Torsionswinkel und gleichzeitig hohem Drehzahlunterschied von n1/2, eine kurze Kupplungsschaltzeit durch die Steuerelektronik vorgegeben. Solcherart kann die Einkuppelzeit verringert werden, um ein Hindernis ohne unzulässig lange Schlupfzeit (erhöhte Kupplungstemperatur und damit Verschleiß) zu überfahren.

Die erfindungsgemäße Steuerung kann auch bei Allradfahrzeugen bzw. bei mehreren angetriebenen Achsen angewendet werden, wobei von der Steuerelektronik ein Verdrehwinkelmittelwert, resultierend aus einem Abgleich aller Achsen, erkannt und ausgewertet wird. Solcherart kann auch das Allradfahrzeug mit unterschiedlichen Radreibwerten komfortabel angefahren werden.

Weitere für Umwelt und Sicherheit gewichtige Vorteile ergeben sich bei der Anwendung der erfindungsgemäßen Steuerung beim Pkw, nämlich, indem infolge längerer Kupplungseinschaltzeit beim Anfahren aus dem Stand ein sogenannter "Kavaliersstart", der die Verkehrssicherheit erheblich gefährdet, einfach unterbunden wird. Dies kommt auch der Umwelt zugute, indem die Geräusch- und Schadstoffemission minimiert wird.

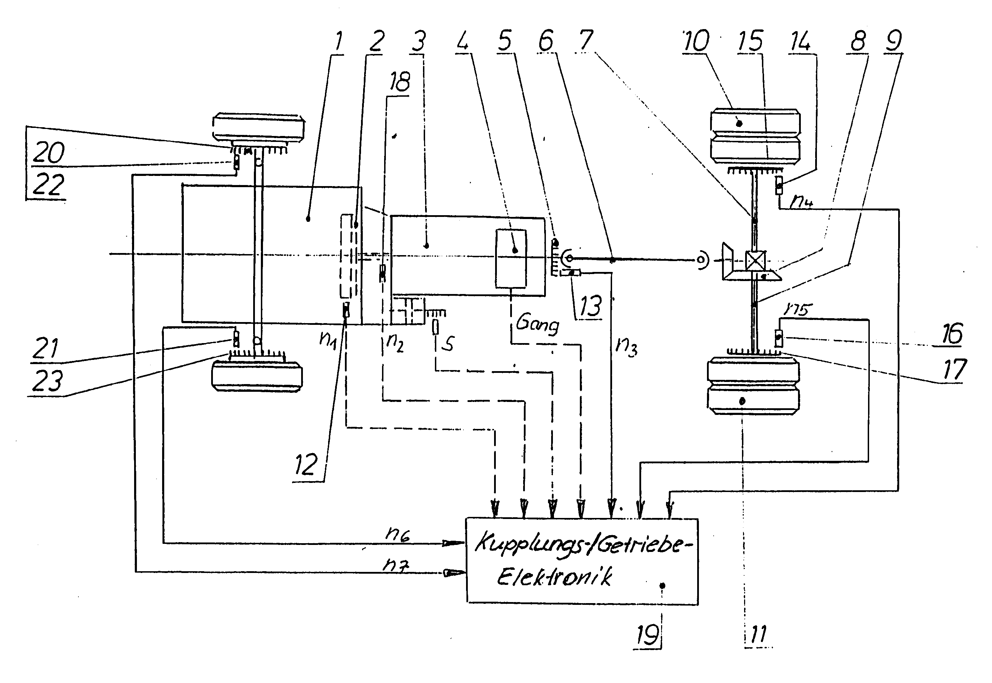

Die Erfindung ist in einem Ausführungsbeispiel dargestellt und beschrieben.
- Die Figur zeigt:: eine Schemaskizze der erfindungsgemäßen Steuerung.

Der Verbrennungsmotor 1 ist über Einschaltkupplung 2 mit dem Gangschaltgetriebe 3 verbunden. Die Ganganzeige 4 teilt der Steuerelektronik 19 den geschalteten Gang mit. Am Getriebeausgang ist ein Polrad 5 angebracht, das auf einen Drehzahlsensor 13 wirkt, der die Steuerelektronik 19 beaufschlagt. Vom Getriebeausgang führt eine Gelenkwelle 6 zum Achsübersetzungsgetriebe 8, das über Achsen 7, 9 mit den Antriebsrädern 10 und 11 verbunden ist. Die mit den Antriebsrädern 10 und 11 verbundenen Polräder 15 und 17 wirken auf die Rad-Drehzahlsensoren 14 und 16 ein, deren Ergebnisse in die Steuerelektronik 19 eingespeist und dort mit einem Eichwert verglichen werden. Der Vergleich gibt die für die jeweilige Fahr- und Beladungssituation optimale Kupplungseinschaltzeit vor. Die Polräder 22 und 23 aktivieren die Drehzahlsensoren 20 und 21, und die Elektronik 19 kann beim Vergleich mit den Signalen der Sensoren 14 und 16 den Fahrbahnzustand, z.B. trocken oder vereist, feststellen. Dem Motorausgang ist ein Drehzahlsensor 12 zugeordnet und dem Getriebeeingang ein Drehzahlsensor 18, deren Quotient in Zusammenwirken mit der Torsion des Antriebsstranges die Einschaltzeit der Kupplung bei der Überwindung von Hindernissen vorgibt.

### Bezugszeichenliste

- 1: Verbrennungsmotor
- 2: Kupplung zwischen Motor und Getriebe
- 3: Schaltgetriebe
- 4: Ganganzeige
- 5: Polrad am Schaltgetriebeausgang
- 6: Gelenkwelle
- 7: Achse
- 8: Achsübersetzungsgetriebe
- 9: Achse
- 10: Antriebsräder
- 11: Antriebsräder
- 12: Drehzahlsensor am Motor
- 13: Drehzahlsensor am Ausgangsschaltgetriebe
- 14: Drehzahlsensor für Antriebsräder 10
- 15: Polrad für Antriebsräder 10
- 16: Drehzahlsensor für Antriebsräder 11
- 17: Polrad für Antriebsräder 11
- 18: Drehzahlsensor am Eingang zum Schaltgetriebe
- 19: Steuerelektronik
- 20: Drehzahlsensor rechtes Vorderrad
- 21: Drehzahlsensor linkes Vorderrad
- 22: Polrad für 20
- 23: Polrad für 21
- n₁: Motordrehzahl
- n₂: Getriebeeingangsdrehzahl
- n₃: Getriebeausgangsdrehzahl
- n₄: Raddrehzahl für 10
- n₅: Raddrehzahl für 11

## Patentansprüche

1. Steuerung für die Hauptkupplung eines Getriebes in einem Kraftfahrzeug, insbesondere Nutzfahrzeug, mit Rad-Drehzahlsensoren und mindestens einem weiteren Drehzahlsensor sowie den dazugehörigen Polrädern und einer Steuerelektronik, die mit bekannten ABS- und/oder ASR-Systemen zusammenwirken kann, wobei ein Torsionsmoment im Triebstrang zur Steuerung der Kupplung ermittelt und berücksichtigt wird,
dadurch gekennzeichnet,
daß der weitere Drehzahlsensor die Drehzahl am Getriebeausgang ermittelt,
daß als Kenngröße zur Bestimmung der Einkuppelzeit der Hauptkupplung der Triebstrang-Torsionswinkel benutzt wird, der aus dem Vergleich der Signale des Getriebeausgangs-Drehzahlsensors und der Antriebsräder-Drehzahlsensoren ermittelt wird,
und daß die Einkuppelzeit durch Vergleich des Triebstrang-Torsionswinkels mit einem auf einem Einfahrrollenprüfstand ermittelten Eichwert bestimmt wird.

2. Steuerung nach Anspruch 1, dadurch gekennzeichnet, daß die Kupplungszeit mit zunehmendem Triebstrang-Torsionswinkel proportional oder nicht proportional kürzer wird.

3. Steuerung nach Anspruch 1 oder 2, dadurch gekennzeichnet, daß die Kupplungszeit bei einem Torsionswinkel von 0 bis zu einem aus den Variablen ermittelten Mindesttorsionswert durch einen in die Steuerung eingespeisten Konstantwert, der deutlich über dem Eichwert liegt, bestimmt wird.

4. Steuerung nach den Ansprüchen 1 bis 3, dadurch gekennzeichnet, daß beim Anfahren von Randsteinen oder ähnlichem, angezeigt durch einen hohen Antriebsstrang-Torsionswinkel und einem gleichzeitig hohen Drehzahlunterschied von n1/n2, eine sehr kurze Einkuppelzeit durch die Steuerelektronik (19) vorgegeben wird.

5. Steuerung nach einem oder mehreren der Ansprüche 1 bis 4, dadurch gekennzeichnet, daß der Wechsel von Reifengröße und Achsübersetzung von der Steuerelektronik (19) erkannt wird und diese dann selbsttätig einen neuen Eichwert bestimmt.

6. Steuerung nach einem oder mehreren der Ansprüche 1 bis 5, dadurch gekennzeichnet, daß bei Allradfahrzeugen bzw. bei mehreren angetriebenen Achsen von der Steuerelektronik (19) ein Verdrehwinkel-Mittelwert erkannt und ausgewertet wird.

## Claims

1. A control system for the main clutch of a transmission in a motor vehicle, more particularly a commercial vehicle, with wheel rotational speed sensors and at least one further rotational speed sensor, associated magnet wheels and control electronics wbich can cooperate with known ABS and/or ASR systems, a torsional moment in the drive line being detected and taken into account for controlling the clutch, characterised in that the further rotational speed sensor detects the rotational speed at the transmission output, the drive line torsion angle which is determined from a comparison of the signals of the transmission output rotational speed sensor and the drive wheel rotational speed sensors is used as a characteristic value for determining the coupling time of the main clutch, and the coupling time is determined by a comparison of the drive line-torsion angle and a reference value determined on a run-in roller test stand.

2. A control system according to claim 1, characterised in that the coupling time becomes proportionally or non-proportionally shorter as the drive line torsion angle increases.

3. A control system according to claim 1 or 2, characterised in that, with a torsion angle of 0 to a minimum torsion value determined from the variables, the coupling time is determined by a constant value which is fed into the control system and lies clearly above the reference value.

4. A control system according to claims 1 to 3, characterised in that, when the vehicle mounts kerbstones or the like, which is indicated by a high drive line torsion angle and a simultaneously high rotational speed difference of n1/n2, a very short coupling time is selected by the control system (19).

5. A control system according to one or more of claims 1 to 4, characterised in that a change of tyre sizes and axle transmission is detected by the control electronics (19), which then automatically determine a new reference value.

6. A control system according to one or more of claims 1 to 5, characterised in that, in the case of all-wheel drive vehicles or a plurality of driven axles, the torsion angle mean value is determined and evaluated by the control electronics (19).

## Revendications

1. Commande de l'embrayage en tête de la transmission d'un véhicule, en particulier un véhicule utilitaire, comportant des détecteurs de vitesse de roue, au moins un autre détecteur de vitesse, les roues polaires qui leur sont associées et une électronique de commande pouvant coopérer avec des systèmes ABS ou ASR, le moment de torsion de la ligne de transmission étant déterminé et pris en compte pour commander l'embrayage, caractérisée en ce que :
- le détecteur supplémentaire mesure la vitesse de l'arbre de sortie de la boîte de vitesses,
- pour déterminer le moment où doit s'effectuer la manoeuvre de l'embrayage, on utilise comme grandeur caractéristique l'angle de torsion de la ligne de transmission, établi par comparaison des signaux fournis par le détecteur de vitesse de sortie de boîte et les détecteurs de vitesse des roues,
- le moment où doit s'effectuer la manoeuvre de l'embrayage est déterminé par comparaison de l'angle de torsion de la ligne de transmission avec une valeur de référence déterminée par des essais au banc.

2. Commande selon la revendication 1, caractérisée en ce que la durée de l'opération d'embrayage est réduite, proportionnellement ou non, lorsque l'angle de torsion augmente.

3. Commande selon la revendication 1 ou 2, caractérisée en ce que la durée de l'opération d'embrayage, lorsque l'angle de torsion est compris entre zéro et une valeur minimale résultant des variables, est fixée à une valeur constante enregistrée dans le dispositif de commande et nettement supérieure à la valeur de référence.

4. Commande selon selon l'une quelconque des revendications 1 à 3, caractérisée en ce que pour franchir une bordure de trottoir ou un obstacle analogue, signalé à la fois par un angle de torsion élevé et par une grande différence entre les vitesses n1 et n2, l'électronique de commande (19) impose une courte durée d'embrayage.

5. Commande selon l'une quelconque des revendications 1 à 4, caractérisée en ce que le changement de la dimension des roues et/ou du rapport de démultiplication du pont, est perçu par l'électronique de commande (19), qui définit alors automatiquement une nouvelle valeur de référence.

6. Commande selon l'une quelconque des revendications 1 à 5, caractérisée en ce que pour les véhicules tout-terrain, on a plusieurs essieux moteurs, l'électronique de commande perçoit et exploite une valeur moyenne des angles de torsion.
